# EUROPÄISCHE PATENTSCHRIFT

(11) **EP 1 920 183 B1**
(45) Veröffentlichungstag und Bekanntmachung des Hinweises auf die Patenterteilung: **08.07.2009**
(21) Anmeldenummer: 06793058.6
(22) Anmeldetag: 29.08.2006
(51) Int. Cl.: F16L 37/092

(54) **ANSCHLUSSVORRICHTUNG FÜR MEDIENLEITUNGEN**
CONNECTOR DEVICE FOR MEDIA CONDUITS
DISPOSITIF DE RACCORDEMENT POUR CONDUITES DE FLUIDE

(30) Priorität: 30.08.2005 DE 202005013691 U
(43) Veröffentlichungstag der Anmeldung: 14.05.2008
(73) Patentinhaber: Voss Automotive GmbH, 51688 Wipperfürth (DE)
(72) Erfinder: BRANDT, Josef, 51688 Wipperfürth (DE); HAGEN, Harald, 51688 Wipperfürth (DE); LECHNER, Martin, 51789 Lindlar (DE); TERLAU, Norbert, 51515 Kürten (DE); SIEPER, Günter, 42853 Remscheid (DE)
(74) Vertreter: Patentanwälte Dr. Solf & Zapf
(86) Internationale Anmeldenummer: PCT/EP2006/065775
(87) Internationale Veröffentlichungsnummer: WO 2007/025966

(56) Entgegenhaltungen:
- EP-A2- 0 733 844
- WO-A-20/04029497
- WO-A-20/05028939
- WO-A-20/05064221

## Beschreibung

Die vorliegende Erfindung betrifft eine Anschlussvorrichtung zum Steckanschluss mindestens einer Medienleitung (Rohr- oder Schlauchleitung für Gase oder Flüssigkeiten) gemäß dem Oberbegriff des Anspruchs 1.

Eine solche Anschlussvörrichtung ist in der WO 2004/029497 A1 sowie auch in der WO 2005/028939 A1 jeweils beschrieben. Bei diesen bekannten Ausführungen ist das Einsatzteil hülsenförmig ausgebildet und in eine Erweiterung der Aufnahmeöffnung des Basisteils umfangsgemäß zumindest gegen Eindringen von Schmutz oder dergleichen Fremdstoffen dichtend eingesetzt, wobei das Einsatzteil im eingesetzten Zustand mündungsseitig bündig abschließend vollständig innerhalb des Basisteils liegt. Weiterhin besteht das Einsatzteil aus einem ersten, relativ härteren formstabilen Kunststoffmaterial, wobei im freien, mündungsseitigen Endbereich der Federarme eine Schmutzdichtung materialschlüssig aus einem zweiten, relativ weicheren und elastischen Kunststoffmaterial angeformt ist. Somit ist das Einsatzteil als einstückiges Mehrkomponentenformteil aus Kunststoff ausgebildet. Die Federarme sind durch Längsschlitze des hülsenförmigen Einsatzteils gebildet, wobei die Längsschlitze ebenfalls mit dem angespritzten Material der Schmutzdichtung ausgefüllt sind. Bei der bekannten Anschlussvorrichtung hat sich im praktischen Einsatz herausgestellt, dass ein Lösen der Leitung durch Entnahme des Einsatzteils aus dem Basisteil zum Teil sehr schwierig ist.

Die EP 0 733 844 A2 beschreibt eine insofern ähnliche Anschlussvorrichtung, als auch dabei ein Einsatzteil über eine Rastverbindung lösbar in ein Basisteil eingesetzt ist. Das Einsatzteil ist einstückig aus einem Kunststoffmaterial geformt und besteht aus einem Zentrierring, der als ein in Umfangsrichtung geschlossener und den Innenkonus aufweisender Ringteil gebildet ist, sowie aus mindestens zwei federelastischen Rastarmen. Die Rastarme sind im äußeren Umfangsbereich einstückig an den Zentrierring angeformt, und sie erstrecken sich axial, d. h. etwa parallel zur Leitungssteckachse, von dem geschlossenen Zentrierring aus entgegen der Leitungs-Einsteckrichtung. Jeder Rastarm weist einen aus dem Basisteil hervorragenden Betätigungsabschnitt auf. Weiterhin weist dabei zur Schmutzabdichtung der geschlossene Zentrierring des Einsatzteils eine einstückig aus dem Kunststoffmaterial angeformte, innere, umlaufende Dichtlippe zur Anlage auf der Leitung auf. Indem die Rastarme im äußeren Umfangsbereich des geschlossenen Zentrierrings mit diesem verbunden sind, sind die Rastarme für ihre Lösebewegung relativ frei und von der Schmutz-Dichtlippe unbeeinflusst radial beweglich.

Dervorliegenden Erfindung liegt die Aufgabe zugrunde, eine Anschlussvorrichtung der genannten Art so zu verbessern, dass unter Aufrechterhaltung einer sicheren Arretierung der eingesteckten Medienleitung das Lösen vereinfacht wird.

Erfindungsgemäß wird dies durch die Merkmale des unabhängigen Anspruchs 1 erreicht. Vorteilhafte Ausgestaltungsmerkmale der Erfindung sind in den abhängigen Ansprüchen enthalten.

Demnach ist erfindungsgemäß vorgesehen, dass die Rastansätze der Federarme bezüglich ihrer radialen Lösebewegung über eine Verformungszone derart vom Dichtungsbereich der Schmutzdichtung entkoppelt sind, dass die radiale Lösebewegung der Rastansätze durch Verformung der Verformungszone bezüglich einer für die Lösebewegung aufzubringenden Lösekraft im Wesentlichen unbeeinflusst von der radial auf der Medienleitung aufliegenden Schmutzdichtung erfolgt. Dadurch reicht für die Lösebewegung eine vorteilhaft geringe Lösekraft.

In einer ersten Ausführungsform ist vorgesehen, dass jeder Federarm als Verformungszone in einem zwischen dem Innenkonus und dem freien Federam-Ende liegenden Bereich eine Schwächungszone mit reduzierter Biegesteifigkeit derart aufweist, dass bei radialer Abstützung des freien Federarm-Endes auf der Leitung (bevorzugt mittelbar über eine in diesem Bereich vorgesehene Schmutzdichtung) der Rastansatz unter elastischer Biegeverformung der Schwächungszone radial nach innen in seine Lösestellung bewegbar ist. Hierzu reicht vorteilhafterweise eine geringere radiale Lösekraft, weil durch die erfindungsgemäße Schwächungszone erreicht wird, dass der freie, bevorzugt über die Schmutzdichtung auf dem Leitungsumfang abgestützte Endbereich jedes Federarms der radialen Lösebewegung nicht oder nur weniger entgegenwirkt. Dies bedeutet, dass die Rastansätze der Federarme bezüglich ihrer radialen Lösebewegung praktisch vom freien Endbereich (bevorzugt vom Bereich der Schmutzdichtung) entkoppelt sind. Die Rastansätze können sich deshalb mit einer geringen radialen Lösekraft radial bewegen, und zwar ohne oder mit nur unwesentlicher Bewegung der Federarme im endseitigen Bereich. Hierdurch wird insgesamt die Lösbarkeit deutlich verbessert. Indem bevorzugt die Schwächungszone jeweils axial zwischen dem Rastansatz und dem freien Federarm-Ende angeordnet ist, wird praktisch ein Biegegelenk zwischen diesen Bereichen gebildet.

In einer zweiten, besonders vorteilhaften Ausführungsform sind die Federarme mit ihren freien Enden über axiale Zwischenräume von dem mündungsseitigen Ende des hülsenförmigen Einsatzteils entkoppelt, wobei die Verformungszone durch im Bereich der freien Federarm-Enden und in den Zwischenräumen angeordnete, mit der Schmutzdichtung einstückige Bereiche eines elastischen Kunststoffmaterials derart gebildet ist, dass bei der radialen Lösebewegung der Rastansätze die freien Federarm-Enden unter elastischer Materialverformung des Kunststoffmaterials der Verformungszone entsprechend radial mitbewegt werden. Gegebenenfalls kommt es dabei auch anteilig zu einer Biegeverformung im Bereich der freien Enden der Federarme.

Bei der bevorzugten Ausführung kann durch die Entkopplung der Federarme von der Mündungsseite des Einsatzteils Letzteres an seinem mündungsseitigen Ende mit einem in Umfangsrichtung durchgehenden Ringabschnitt mit einer ebenen, vorderen Stirnringfläche ausgebildet sein. Hierdurch wird eine verbesserte Abstützung der Schmutzdichtung insbesondere in axialer Richtung gewährleistet.

Trotz der durch die Erfindung verbesserten Lösbarkeit wird gleichzeitig auch eine hohe Sicherheit gegen ungewolltes Lösen erreicht. Dazu werden bevorzugte Ausgestaltungen im Folgenden noch erläutert werden.

Anhand von bevorzugten, in den Zeichnungsfiguren veranschaulichten Ausführungsbeispielen soll im Folgenden die Erfindung genauer erläutert werden. Dabei zeigen:
- Fig. 1: einen Axialschnitt einer ersten Ausführung einer erfindungsgemäßen Anschlussvorrichtung in einer ersten Schnittebene (Ebene I - I gemäß Fig. 2), beispielhaft in einer Ausführung als Winkelverbinder mit gesteckter Medienleitung,
- Fig. 2: einen Axialschnitt in einer zweiten, zur Ebene gemäß Fig. 1 rechtwinklig angeordneten Ebene (II -II gemäß Fig. 1),
- Fig. 3: eine vergrößerte Darstellung des Bereichs III in Fig. 2 mit nur gestrichelt angedeuteter Medienleitung,
- Fig. 4: eine Perspektivansicht eines Einsatzteils nach der Erfindung,
- Fig. 5: eine vergrößerte Draufsicht des Einsatzteils in Pfeilrichtung V gemäß Fig. 4,
- Fig. 6: eine teilgeschnittene Seitenansicht in Pfeilrichtung VI gemäß Fig. 5,
- Fig. 7: einen vergrößerten Teilschnitt S - S gemäß Fig. 6,
- Fig. 8: einen Schnitt D - D gemäß Fig. 5,
- Fig. 9: eine vergrößerte Darstellung des Bereichs C in Fig. 8,
- Fig. 10: eine vergrößerte Darstellung des Bereichs W in Fig. 8,
- Fig. 11: einen Querschnitt in zwei axial versetzten Ebenen entsprechend dem Verlauf der Schnittlinie F - F in Fig. 8,
- Fig. 12: eine vergrößerte Darstellung des Bereichs U in Fig. 11,
- Fig. 13: einen vergrößerten Teilschnitt R - R gemäß Fig. 6,
- Fig. 14: einen Schnitt A - A gemäß Fig. 5,
- Fig. 15: einen Schnitt B - B gemäß Fig. 5,
- Fig. 16: einen vergrößerten Schnitt L - L gemäß Fig. 14,
- Fig. 17: einen vergrößerten Schnitt K - K gemäß Fig. 14,
- Fig. 18: einen Schnitt G - G gemäß Fig. 5,
- Fig. 19: eine vergrößerte Darstellung des Bereichs J in Fig. 18,
- Fig. 20: einen vergrößerten Teilschnitt M - M gemäß Fig. 19,
- Fig. 21: eine vergrößerte Darstellung des Bereichs F' in Fig. 8,
- Fig. 22: einen Schnitt in der Ebene I - I Gemäß Fig. 8 bzw. 21,
- Fig. 23: eine vergrößerte Darstellung des Bereichs Y in Fig. 15,
- Fig. 24: eine zweite Ausführungsform des Einsatzteils als Alternative zu Fig. 4,
- Fig. 25: eine vergrößerte Draufsicht des Einsatzteils in Pfeilrichtung XXV gemäß Fig. 24 (analog zu Fig. 5),
- Fig. 26: eine Seitenansicht XXVI gemäß Fig. 25 (analog zu Fig. 6),
- Fig. 27: einen Schnitt D-D gemäß Fig. 25 (analog zu Fig. 8),
- Fig. 28: eine Vergrößerung des Bereichs N in Fig. 27,
- Fig. 29: einen Querschnitt entsprechend der Schnittlinie F-F in Fig. 27 (analog zu Fig. 11),
- Fig. 30: eine Vergrößerung des Bereichs U in Fig. 29 (analog zu Fig. 12),
- Fig. 31: einen Schnitt G-G in Fig. 25 (analog zu Fig. 18),
- Fig. 32: eine Vergrößerung des Bereichs J in Fig. 31 (analog zu Fig. 19),
- Fig. 33: einen Axialschnitt einer zweiten Ausführung einer erfindungsgemäßen Anschlussvorrichtung, beispielhaft als Durchgangsverbinder für zwei (nicht dargestellte) Medienleitungen,
- Fig. 34: einen Schnitt in der Ebene A-A gemäß Fig. 33,
- Fig. 35: eine Vergrößerung des Bereichs B in Fig. 34,
- Fig. 36: eine Seitenansicht des Einsatzteils in der Ausführung gemäß Fig. 33 bis 35,
- Fig. 37: eine Draufsicht auf die Mündungsseite in Pfeilrichtung C gemäß Fig. 36,
- Fig. 38: einen Axialschnitt in der Ebene D-D gemäß Fig. 37,
- Fig. 39: einen Axialschnitt in der Ebene G-G gemäß Fig. 37 (um 90 ° in der Zeichnungsebene gedreht),
- Fig. 40: eine bereichsweise geschnittene Seitenansicht des Einsatzteils in Pfeilrichtung E gemäß Fig. 37,
- Fig. 41: einen Schnitt in der Radial-Ebene I-I gemäß Fig. 40,
- Fig. 42: eine Ausschnittvergrößerung des Bereichs O in Fig. 39 und
- Fig. 43: eine stark vergrößerte Ansicht des Bereichs N in Fig. 38.

In den verschiedenen Figuren der Zeichnung sind gleiche Teile stets mit den gleichen Bezugszeichen versehen, so dass jede eventuell nur einmal unter Bezugnahme auf eine bestimmte Zeichnungsfigur erscheinende Beschreibung eines Teils analog auch bezüglich der anderen Zeichnungsfiguren gilt, in denen das Teil mit der entsprechenden Bezugsziffer ebenfalls zu erkennen ist.

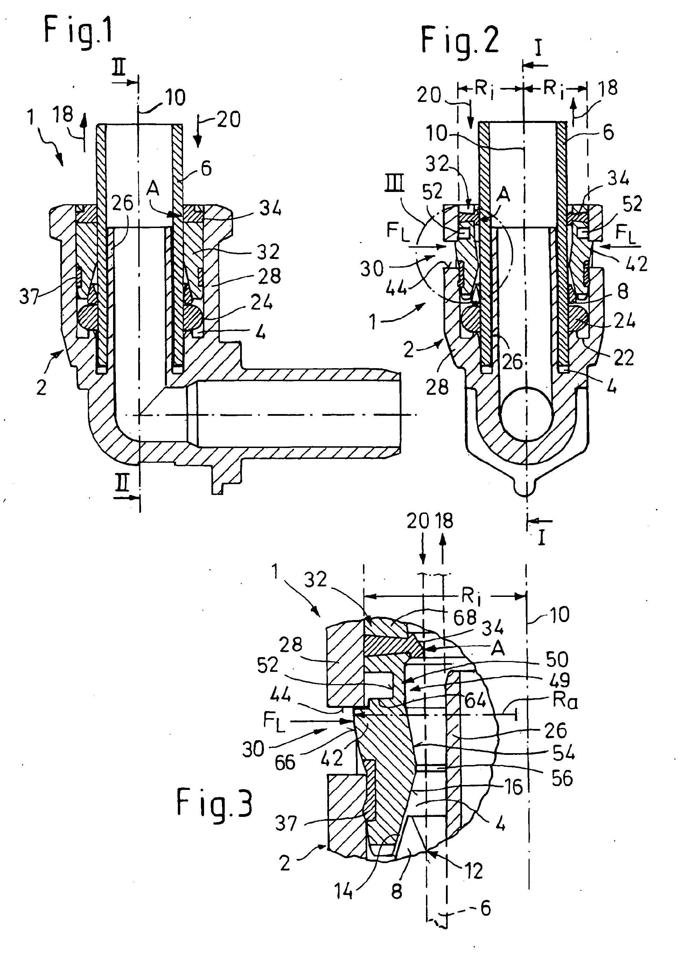

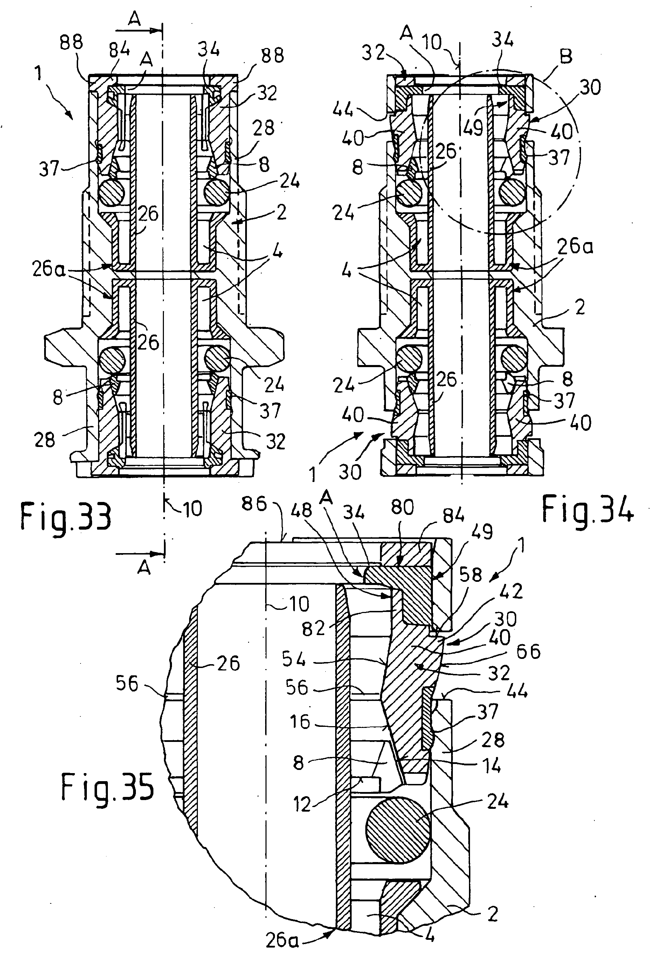

Eine erfindungsgemäße Anschlußvorrichtung 1 besteht gemäß Fig. 1 bis 3 und Fig. 33 bis 35 aus einem Gehäuseteil 2 mit - mindestens - einer einseitig offenen Aufnahmeöffnung 4 zum axialen Einstecken eines Endes einer als Rohr- oder Schlauchleitung ausgebildeten Medienleitung 6 sowie aus einem in dem Gehäuseteil 2 bzw. innerhalb der Aufnahmeöffnung 4 angeordneten Klemmring 8 zum Arretieren der axial, d. h. in Richtung einer Steckachse 10, eingesteckten Leitung 6. Dabei ermöglicht die Anschlußvorrichtung 1 eine einfache und schnelle Montage der insbesondere aus Kunststoff bestehenden Leitung 6 durch einfaches Einstecken in das Gehäuseteil 2 ohne sonstige Montageschritte. Der Klemmring 8 sitzt derart in einer Erweiterung der Aufnahmeöffnung 4, dass er die Aufnahmeöffnung 4 und damit die eingesteckte Leitung 6 umschließt. Der Klemmring 8 weist an einer Stelle seines Umfangs einen axial und radial durchgehenden Schlitz, d. h. eine Unterbrechung in seinem Umfangsverlauf auf, wodurch er radial elastisch aufgeweitet und/oder verengt werden kann. In seinem inneren Umfangsbereich besitzt der Klemmring 8 - siehe dazu insbesondere die größeren Darstellungen in Fig. 3 und 35 - (mindestens) eine radial nach innen ragende, umlaufende Zahnkante 12. Der Klemmring 8 weist ferner (mindestens) einen Außenkonus 14 auf, der zum Arretieren der Leitung 6 mit einem Innenkonus 16 des Gehäuseteils 2 derart zusammenwirkt, dass bei einem Zug in Löserichtung (Pfeilrichtung 18 in Fig. 1 bis 3) an der Leitung 6, d. h. bei einer Bewegung entgegen der Einsteckrichtung (Pfeil 20 in Fig. 1 bis 3), der Klemmring 8 zunächst durch kraftschlüssige Anlage seiner Zahnkante 12 mitgenommen wird, bis sein Außenkonus 14 zur Anlage in dem Innenkonus 16 des Gehäuseteils 2 gelangt. Bei weitergehendem Zug wird über die Konen 14, 16 eine radial nach innen gerichtete Kraft erzeugt, durch die der Klemmring 8 elastisch verengt wird, so dass die Zahnkante 12 kraft- und/oder formschlüssig mit dem im Wesentlichen glattflächigen, zylindrischen Leitungs - Außenumfang zusammenwirkt und dadurch die Leitung 6 gegen Herausziehen arretiert wird. Hierbei kann in einer vorteilhaften, aber nicht dargestellten Ausgestaltung vorgesehen sein, dass der Innenkonus 16 des Gehäuseteils 2 aus zwei axial benachbarten Innenkonusabschnitten mit verschiedenen Konuswinkeln besteht. Ein erster, von der Einsteckseite (Mündungsseite der Gehäuse-Aufnahmeöffnung) entfernt liegender Innenkonusabschnitt ist mit einem ersten, flacheren Konuswinkel ausgeführt, und ein zweiter, sich in Richtung zur Einsteck- bzw. Mündungsseite anschließender Innenkonusabschnitt weist einen zweiten, steileren Konuswinkel auf. Dabei besteht auch der Außenkonus 14 des Klemmringes 8 aus zwei axial benachbarten Außenkonusabschnitten mit entsprechenden Konuswinkeln in Anpassung an die Innenkonusabschnitte. Durch diese Ausgestaltung wird eine Verkürzung des axialen Rückzug-Weges zur Arretierung erreicht. Einzelheiten hierzu sind in der älteren Anmeldung DE 20 2005 009 5754 enthalten.

Zur druckdichten Abdichtung der Leitung 6 ist innerhalb des Gehäuseteils 2 im Bereich zwischen dem Klemmring 8 und einer Bohrungsstufe 22 ein Dichtring 24 (Druckdichtung) angeordnet. Zudem ist bevorzugt innerhalb des Gehäuseteils 2 eine zur Steckachse 10 koaxiale Stützhülse 26 zum Eingriff in die eingesteckte Leitung 6 angeordnet. Die Stützhülse 26 stützt somit die ein- bzw. aufgesteckte Leitung 6 einerseits gegen die über den Klemmring 8 aufgebrachte Radialkraft und andererseits auch gegen die Anlagekraft des Dichtringes 24 von innen her ab. Dadurch ist die erfindungsgemäße Anschlußvorrichtung 1 grundsätzlich auch für relativ flexible Schlauchleitungen geeignet.

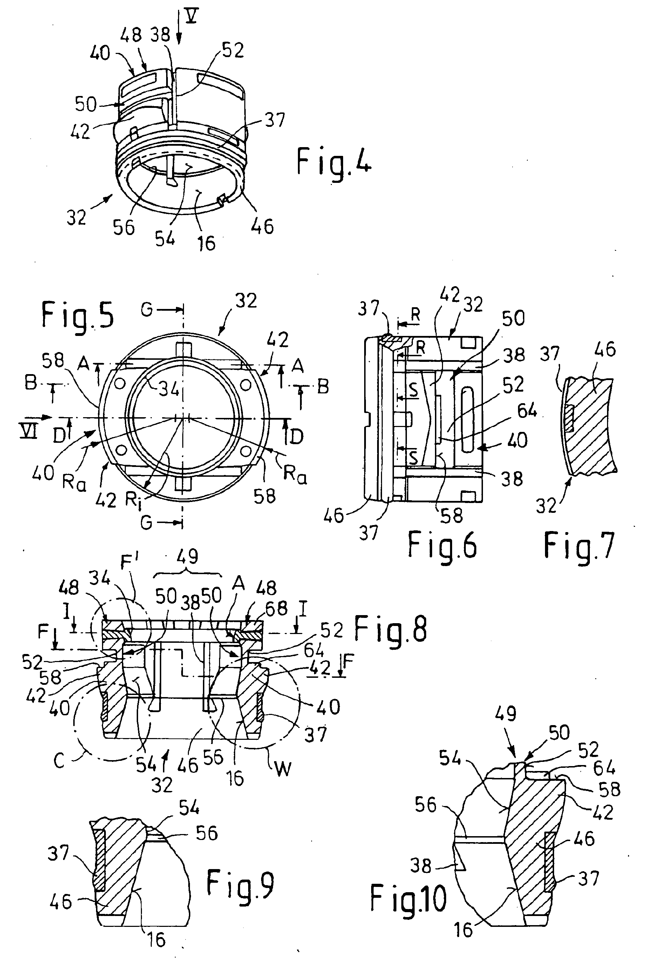

Zum Zwecke einerseits der Herstellbarkeit bzw. Montierbarkeit der Anschlußvorrichtung 1 sowie andererseits der Lösbarkeit der Leitung 6 ist das Gehäuseteil 2 zweiteilig ausgebildet; es besteht aus einem Basisteil 28 und einem Einsatzteil 32. Das Einsatzteil 32 weist den Innenkonus 16 auf und ist mit dem Basisteil 28 über eine formschlüssige Rastverbindung 30 (schnappbare Formschlußverbindung mit einem Wirkflächen-Hinterscheidungswinkel größer/gleich 90 °) verbunden. Das Einsatzteil 32 weist mündungsseitig eine Schmutzdichtung 34 mit einem Dichtungsbereich A zur umfangsgemäßen Anlage auf der eingesteckten Leitung 6 auf. Das Einsatzteil 32 wird weiter unten noch detailliert anhand der gesonderten Darstellungen in den Fig. 4 bis 23 sowie Fig. 36 bis 43 beschrieben.

Die oben beschriebene Stützhülse 26 ist - bei nicht spantechnisch geformten Teilen - zweckmäßigerweise einstückig mit dem Basisteil 28 insbesondere als Formteil aus Kunststoff ausgebildet (siehe Fig. 1 und 2). Gemäß Fig. 33 bis 35 kann die Stützhülse 26 auch als gesondertes Einsatzteil 26a ausgebildet sein. Dadurch können das Einsatzteil 26a mit der Stützhülse 26 einerseits und das Basisteil 28 andererseits aus verschiedenen Materialien bestehen.

Bevorzugt ist das Einsatzteil 32 mit der Schmutzdichtung 34 als einstückiges Mehrkomponenten-Formteil aus insbesondere mindestens zwei unterschiedlichen Kunststoffmaterialien ausgebildet, und zwar besteht das Einsatzteil 32 aus einem ersten, relativ härteren und formstabilen Kunststoffmaterial, während die Schmutzdichtung 34 unmittelbar einstückig materialschlüssig aus einem zweite, relativ weicheren und elastischen Kunststoffmaterial angeformt ist. Bevorzugt handelt es sich um ein thermoplastisches Elastomer (TPE). Hierbei weist die Schmutzdichtung 34 auf ihrer radial nach innen weisenden Seite den Dichtungsbereich A zur umfangsgemäßen Auflage auf der Leitung 6 auf.

Das Einsatzteil 32 ist gemeinsam mit der Schmutzdichtung 34 insgesamt im Wesentlichen hülsenförmig ausgebildet und in eine Erweiterung 36 der Aufnahmeöffnung 4 des Basisteils 28 eingesetzt. Zur Abdichtung des Spaltes zwischen dem Basisteil 28 und dem Einsatzteil 32 gegen Eindringen von Schmutz und der gleichen Fremdstoffen weist das Einsatzteil 32 auf seinem äußeren Umfang eine Dichtung 37 auf. Bei der dargestellten, bevorzugten Ausführung besteht diese Dichtung 37 aus einem relativ weichen elastischen Material und ist dazu insbesondere einstückig materialschlüssig analog zu der Schmutzdichtung 34 angeformt. Somit besteht die Dichtung 37 bevorzugt aus einem TPE (thermoplastischen Elastomer). Hierbei ist es besonders vorteilhaft, wenn das Einsatzteil 32 im eingesetzten Zustand mündungsseitig bündig abschließend vollständig innerhalb des Basisteils 28 liegt. Daraus resultiert eine vorteilhaft kompakte Bauform der Anschlußvorrichtung 1, die mündungsseitig eine ebene, über die Schmutzdichtung 34 zur Leitung 6 hin geschlossene Stirnfläche aufweist.

Zwecks Lösbarkeit der Leitung 6 ist vorgesehen, dass das hülsenförmige Einsatzteil 32 - siehe dazu insbesondere die gesonderten, vergrößerten Darstellungen in Fig. 4 bis 23 und Fig. 36 bis 43 - mindestens zwei durch Längsschlitze 38 gebildete, radialelastische, diametral gegenüberliegende Federarme 40 aufweist. Jeder Federarm 40 greift mit einem radial nach außen ragenden, nasenartigen Rastansatz 42 formschlüssig, d. h. mit Hinterschneidung ≥ 90 °, in eine korrespondierende Rastöffnung 44 des Basisteils 28 lösbar ein. Die Rastöffnungen 44 sind hierbei als radiale Durchgangsöffnungen ausgebildet, so dass die Rastansätze 42 zum Lösen von außen mit einem geeigneten Werkzeug erreicht und radial nach innen bewegt werden können, wodurch die Leitung 6 gemeinsam mit dem Klemmring 8 und dem Einsatzteil 32 entnommen werden kann (Pfeilrichtung 18 in Fig. 1 bis 3).

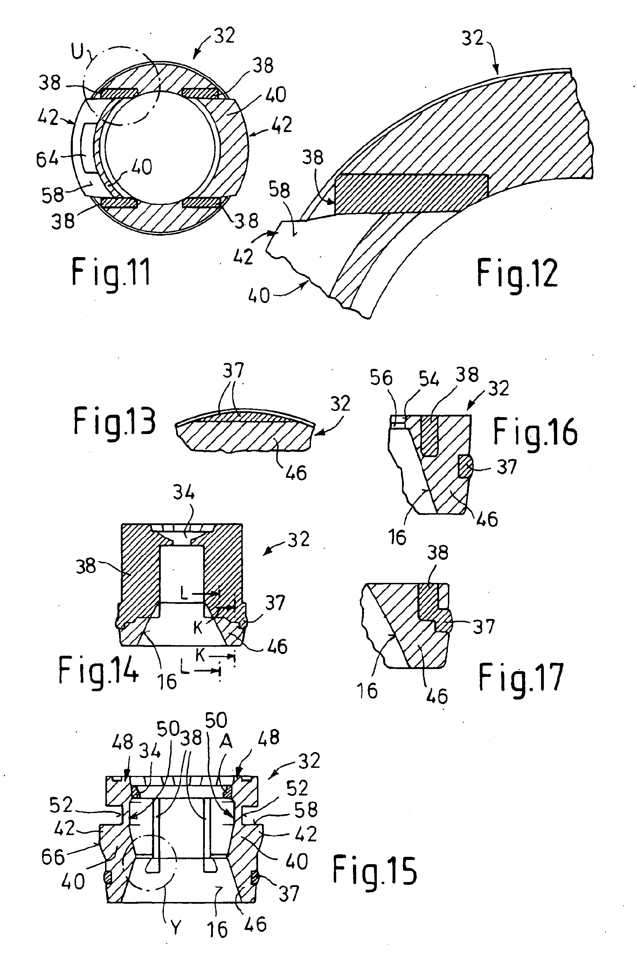

Bei der beschriebenen, bevorzugten Ausgestaltung ist es weiterhin vorteilhaft, wenn die Längsschlitze 38 des Einsatzteils 32 vollständig mit dem Material der Schmutzdichtung 34 ausgefüllt sind (siehe dazu insbesondere den Schnitt A - A im Bereich der Längsschlitze 38 in Fig. 14 sowie den Querschnitt in Fig. 11). Diese Ausgestaltung führt zur Gewährleistung einer optimalen Schmutzabdichtung, weil auch im Bereich der Längsschlitze 38 tatsächliche Spalte vermieden werden. Dennoch gestattet die Elastizität des die Längsschlitze 38 ausfüllenden Dichtungsmaterials (insbesondere ein TPE) die erforderliche Radialbewegung der Federarme 40.

Alternativ können die Schmutzdichtungen 34 und 37 durch gesonderte elastomere Einlegeteile (z. B. O-Ringe) ausgeführt werden. Dabei ist es aber vorteilhaft, die Längsschlitze 38 wie beschrieben durch ein elastisches Material (TPE) auszufüllen.

Bei den Ausführungen gemäß Fig. 1 bis 32 (siehe dazu z. B. Fig. 4, 6, 8, 14, 15 und 18) verlaufen die die Federarme 40 bildenden Längsschlitze 38 vom Bereich des Innenkonus 16 aus durchgehend bis zum gegenüberliegenden, mündungsseitigen Ende des hülsenförmigen Einsatzteils 32. Dadurch erstrecken sich die Federarme 40 ausgehend von einem den Innenkonus 16 aufweisenden, umfangsgemäß geschlossenen Ringabschnitt 46 des Einsatzteils 32 mit ihren freien Enden 48 bis zur Mündungsseite, wo die freien Enden 48 mit der Schmutzdichtung 34 verbunden sind.

Erfindungsgemäß ist nun bei allen Ausführungen vorgesehen, dass die Rastansätze 42 der Federarme 40 bezüglich ihrer radialen Lösebewegung über eine Verformungszone 49 derart vom Bereich der Schmutzdichtung 34 entkoppelt sind, dass die radiale Lösebewegung der Rastansätze 42 unter hauptsächlicher Verformung der Verformungszone 49 hinsichtlich einer für die Lösebewegung aufzubringenden Lösekraft im Wesentlichen unbeeinflusst von der radial auf der Medienleitung 6 abgestützten Schmutzdichtung 34 erfolgt. Dadurch ist die Lösekraft weitgehend unabhängig von einer durch die Schmutzdichtung 34 bewirkten Gegenkraft, so dass insgesamt eine vorteilhaft geringe Lösekraft zur Betätigung der Rastansätze 42 ausreicht.

Bei den Ausführungen gemäß Fig. 1 bis 32 ist zur Verbesserung bzw. Erleichterung der Lösbarkeit der Rastverbindung 34 vorgesehen, dass jeder Federarm 40 als Verformungszone 49 eine Schwächungszone 50 mit reduzierter Biegesteifigkeit derart aufweist, dass bei radialer Abstützung des freien Federarm-Endes 48 über die Schmutzdichtung 34 auf der Leitung 6 der Rastansatz 42 unter elastischer Biegeverformung der Schwächungszone 50 radial nach innen in seine Lösestellung bewegbar ist. Hierzu wird auf die Darstellungen in Fig. 2 und 3 verwiesen. Wenn zum Lösen mittels eines geeigneten, nicht dargestellten Werkzeuges durch die Rastöffnungen 44 hindurch jeweils eine radiale Lösekraft F_{L} auf die Rastansätze 42 aufgebracht wird, so werden dadurch zunächst die Federarme 40 insgesamt elastisch radial nach innen bewegt (verschwenkt). Da sich aber die freien Enden 48 der Federarme 40 - mittelbar über die Schmutzdichtung 34 - auf dem Umfang der Medienleitung 6 abstützen, tritt bei weitergehender Radialbewegung der Rastansätze 42 nach einer bestimmten radialen Kompression der Schmutzdichtung 34 jeweils eine Biegeverformung im Bereich der Schwächungszone 50 auf, so dass die Schwächungszone 50 als Biegegelenk wirkt. Dadurch werden praktisch die freien Federarm-Enden 48 von der Lösekraft "entkoppelt", d. h. die freien Enden 48 verursachen allenfalls nur eine geringfügige, der Lösekraft F_{L} entgegenwirkende Kraft, wodurch die Lösekraft F_{L} insgesamt vorteilhaft gering ist.

In der bevorzugten Ausführungsform ist die Schwächungszone 50 jedes Federarms 40 im axial zwischen dem Rastansatz 42 und der Schmutzdichtung 34 liegenden Bereich angeordnet. Dabei kann mit Vorteil die Schwächungszone 50 jedes Federarms 40 durch eine Querschnittsreduzierung gebildet sein, und zwar durch eine Querschnittsreduzierung um mindestens 25 % auf höchstens ca. 75 %, vorzugsweise um 50 % bis 75 % auf ca. 50 % bis 25 %, des ursprünglichen Federarm-Querschnittes, der in den angrenzenden Bereichen des Federarms 40 vorgesehen ist. Dabei kann die Quer schnittsreduzierung durch eine äußere radiale Ausnehmung und/oder durch eine innere radiale Erweiterung des Innenquerschnittes gebildet sein.

Im dargestellten, bevorzugten Ausführungsbeispiel gemäß Fig. 1 bis 32 weist einerseits jeder Federarm 40 in der Schwächungszone 50 auf seiner radial nach außen weisenden Seite eine radiale, vorzugsweise nutartig in Umfangsrichtung verlaufende Ausnehmung 52 auf. Andererseits weist das Einsatzteil 32 im Bereich der Federarme 40 auf seiner radial nach innen zur Leitung 6 weisenden Innenseite im Bereich der Verformungszonen 49 einen vergrößerten Innendurchmesser auf. Dabei ist vorgesehen, dass sich der Innendurchmesser im Anschluss an den kleinsten Durchmesser des Innenkonus 16 über schräg verlaufende Konusabschnitte 54 in Richtung der Verformungszonen 49 vergrößert. Hierzu wird insbesondere auf Fig. 3 sowie auch auf Fig. 8 und 15 verwiesen. Demnach ist zwischen dem Innenkonus 16 und den Konusabschnitten 54 im Bereich jedes Federarms 40 eine Kante 56 mit einem Innendurchmesser gebildet, der größer als der Außendurchmesser der Medienleitung 6 ist (Fig. 3). Durch die beschriebene Innenkontur der Federarme 40 wird ein für die Lösebewegung hinreichender radialer Bewegungsspielraum geschaffen. Bei der Lösebewegung kann ab einem bestimmten Radialweg jeweils die Kante 56 jedes Federarms 40 zur Auflage auf der Leitung 6 kommen, wodurch dann eine weitere radiale Bewegung jedes Federarms 40 nur noch im Bereich zwischen der Kante 56 und dem freien Ende 48 bzw. der Verformungszone 49 erfolgt (wegen der Abstützung der freien Enden 48 der Federarme 40 auf der Leitung 6 über die Schmutzdichtung 34).

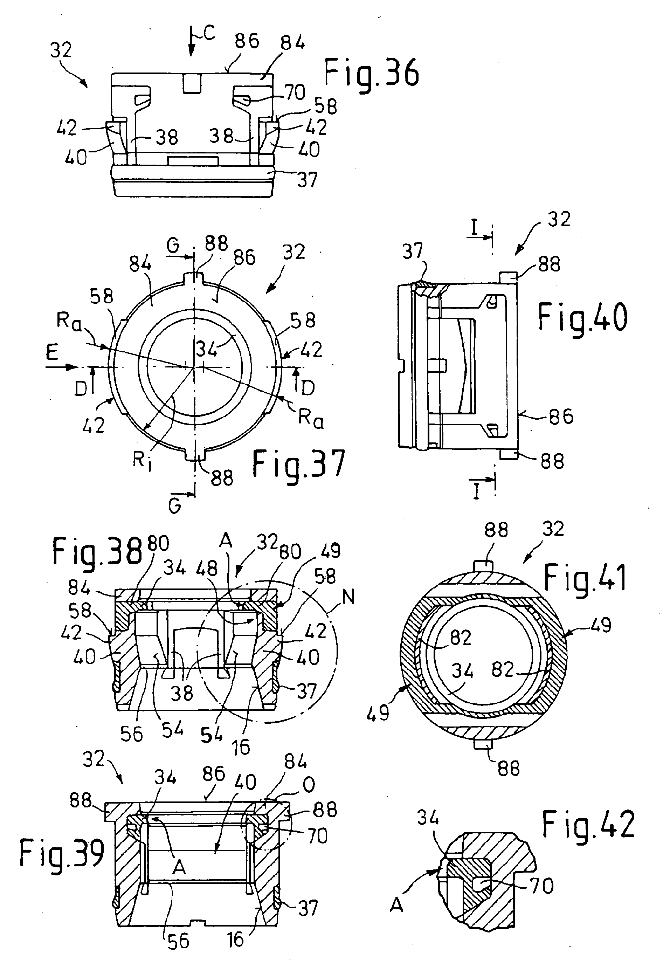

Anhand der Fig. 2, 3 und 5 sowie Fig. 34, 35 und 37 soll jetzt eine vorteilhafte Ausgestaltung der Erfindung erläutert werden. Demnach weist der Rastansatz 42 jedes Federarms 40 eine Rastkantenfläche 58 mit einem äußeren Krümmungsradius Rₐ auf, der zumindest annähernd gleich dem Innenradius Rᵢ des Basisteils 28 ist. Gemäß Fig. 5 und 37 stehen in der entspannten Ruhestellung der Federarme 40 die Rastkantenflächen 58 radial nach außen über den im Wesentlichen dem Außenumfang des Einsatzteils 32 entsprechenden Innenumfang des Basisteils 28 über, damit die Rastkantenflächen 58 in die Rastöffnungen 44 eingreifen können. Dabei sind die Radien-Mittelpunkte der Krümmungsradien Rₐ der Rastkantenflächen 58 gegenüber dem Radien-Mittelpunkt des Radius Rᵢ radial versetzt. Durch die Lösebewegung der Rastansätze 42 radial nach innen wandern dann die Mittelpunkte der Radien Rₐ zum Mittelpunkt des Radius Rᵢ, so dass dann auch die Rastkantenflächen 58 genau der inneren Krümmung des Basisteils 28 entsprechen. Hierdurch wird eine Verbesserung der Freigabe der Verrastung beim Lösen erreicht, indem bei geringstmöglichem Radialweg der Rastansatz 42 jedes Federarms 40 mit der Rastkantenfläche 58 vollständig aus dem Bereich der Rastöffnung 44 freikommt. Wäre im Gegensatz dazu der Krümmungsradius Rₐ um den Versatz der Mittelpunkte der Radien Rₐ und Rᵢ gemäß Fig. 5 und 37 größer, so müßte jeder Rastansatz 42 weiter radial nach innen bewegt werden, damit auch die in Umfangsrichtung weisenden seitlichen Endbereiche der Rastkantenfläche 58 aus der Rastöffnung 44 freikommen. Somit wird durch diese vorteilhafte Ausgestaltung ebenfalls das Lösen erleichtert.

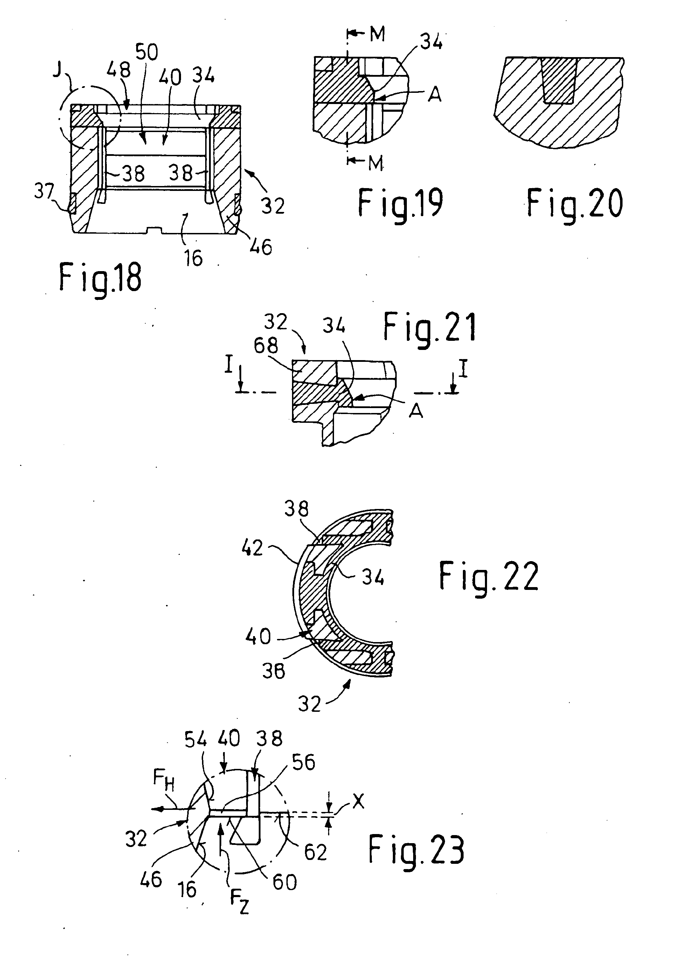

In weiterer bevorzugter Ausgestaltung ist zudem gemäß Fig. 23 vorgesehen, dass innerhalb des Einsatzteils 32 im Anschluß an den Innenkonus 16 Haltekanten als axialer Endanschlag gegen eine in Herausziehrichtung der Leitung 6 gerichtete Bewegung des Klemmrings 8 gebildet sind, und zwar sind im Bereich der Federarme 40 erste Haltekanten 60 und in den zwischen den Federarmen 40 bzw. jeweils zwischen den Schlitzen 38 liegenden Bereichen zweite Haltekanten 62 gebildet. Durch die Haltekanten 60, 62 werden hohe Abzugskräfte ermöglicht, was eine hohe Sicherheit gegen ungewolltes Lösen der Leitung 6 gewährleistet. Dabei ist gemäß Fig. 23 vorgesehen, die ersten Haltekanten 60 gegenüber den zweiten Haltekanten 62 derart um einen axialen Versatz X in Richtung des Innenkonus 16 zu versetzen, dass der (hier nicht dargestellte) Klemmring 8 bei Beaufschlagung mit einer in Herausziehrichtung der Leitung 6 wirkenden Kraft F_{Z} zunächst zur Anlage nur an den ersten Haltekanten 60 gelangt, wodurch die Federarme 40 mit einer radial nach außen wirkenden Haltekraft-Komponente F_{H} beaufschlagt werden. Der axiale Versatz X ist dabei jedoch derart gering bemessen, dass nach einer Verformung im elastischen Bereich der Klemmring 8 zusätzlich zur Anlage an den zweiten Haltekanten 62 gelangt, was die Sicherheit gegen Lösen noch verbessert. Bei Anlage des Klemmrings 8 an den ersten Haltekanten 60 kommt es somit zu einer Kraftzerlegung, wobei die radiale Komponente F_{H} dafür sorgt, dass die Haltekraft der elastischen Federarme 40 erhöht wird. Dadurch werden sehr hohe Abzugskräfte erreicht.

Insbesondere im Zusammenhang mit der zuvor beschriebenen Ausgestaltung ist es weiterhin vorteilhaft, wenn der Rastansatz 42 jedes Federarms 40 im Bereich seiner Rastkantenfläche 58 ein Anschlagelement 64 derart aufweist, dass in einem mit der Kraft F_{Z} in Herausziehrichtung belasteten Zustand der Leitung 6 der Rastansatz 42 in einer definiert in die Rastöffnung 44 des Basisteils 28 eingreifenden Stellung gegen eine weitere, radial nach außen gerichtete, insbesondere aus der oben beschriebenen Haltekraft-Komponente F_{H} resultierende Bewegung abgestützt ist. Dazu stützt sich das Anschlagelement 64 am Innenumfang des Basisteils 28 im an die Rastöffnung 44 angrenzenden Bereich ab (siehe hierzu Fig. 2 und 3). Wie dargestellt kann das Anschlagelement 64 als Ansatz auf der Rastkantenfläche 58 gebildet sein (siehe hierzu beispielsweise Fig. 6, 8 und 10). Das Anschlagelement 64 begrenzt somit den Federweg radial nach außen unter Belastung der Anschlussvorrichtung 1. Es wird demnach vermieden, dass - insbesondere durch die radiale Haltekraft-Komponente F_{H} - die Federarme 40 zu weit radial nach außen gedrückt werden könnten. Durch eine solche zu starke Verformung des Einsatzteils 32 könnte dieses eventuell beim Lösen klemmen und/oder der Klemmring 8 könnte trotz des axialen Anschlages an den Haltekanten 60, 62 herausgerissen werden. Diese Probleme werden durch die Anschlagelemente 64 vorteilhafterweise vermieden; die Lösbarkeit wird bei Gewährleistung hoher Abzugskräfte verbessert.

Wie weiterhin am Besten in den vergrößerten Darstellungen in Fig. 3 und 35 erkennbar ist, weist mit Vorteil jeder Rastansatz 42 auf seiner radial nach außen ragenden Seite in axialer Richtung gesehen eine abgerundete Flankenfläche 66 auf. Durch diese Abrundung der Kontur des Außenbereichs werden ungewollte Verpressungen im Bereich zwischen der Rastkantenfläche 58 und dem an den Ringabschnitt 56 angrenzenden Fußbereich der Federarme 40 vermieden, die aufgrund der Verbiegung beim Entriegeln der Federarme 40 entstehen könnten. Zusätzlich werden die Reibungskräfte beim Herausziehen des entriegelten Einsatzteils 32 reduziert.

Schließlich ist in vorteilhafter Ausgestaltung die Schmutzdichtung 34 auf der freien Mündungsseite zumindest in Teilbereichen ihres Umfanges beidseitig axial gekammert. Auf der Mündungsseite wird dies durch gespritzte Stegabschnitte 68 aus dem härteren ersten Kunststoffmaterial erreicht (siehe beispielsweise Fig. 3, 8 und 21). Diese Stegabschnitte 68 wirken auch als Stützring für die Schmutzdichtung 34, so dass eine gute Formstabilität erreicht wird.

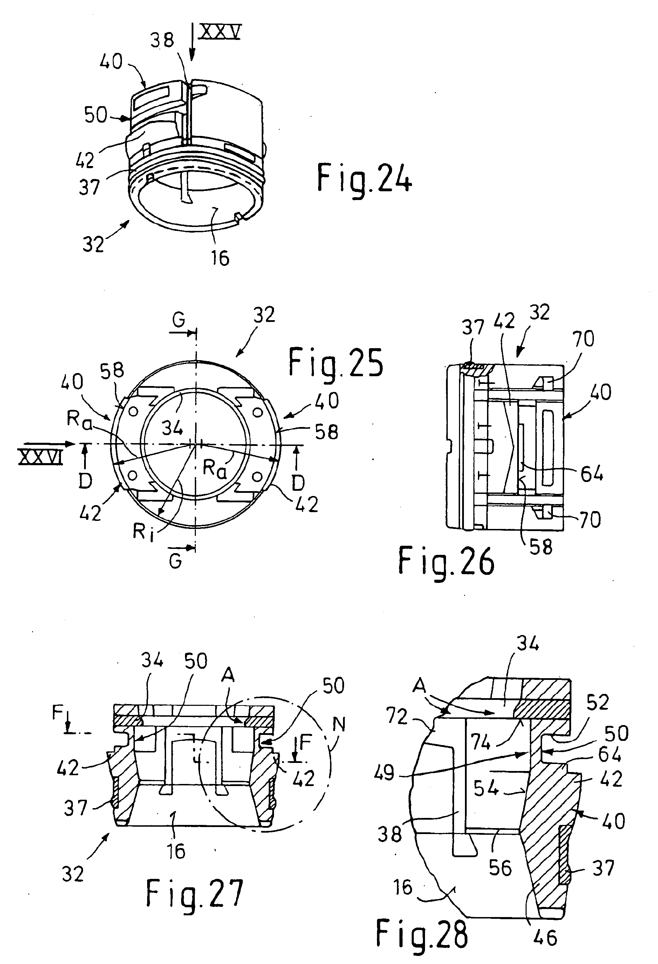

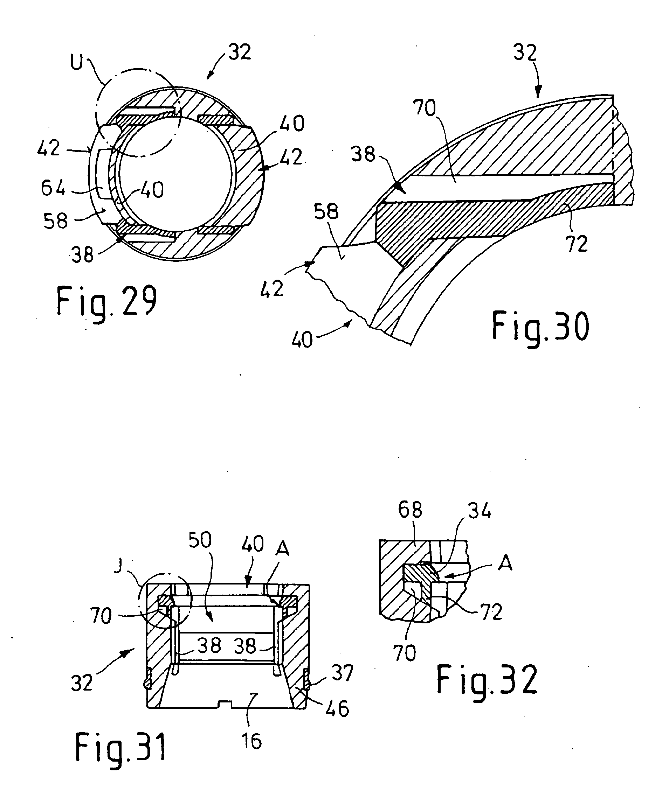

In den Fig. 24 bis 32 ist eine zweite Ausführung des Einsatzteils 32 veranschaulicht, bei der insbesondere der Bereich der Schmutzdichtung 34 gegenüber der ersten Ausführung nach Fig. 1 bis 23 modifiziert ist. Um eine gute Dichtwirkung zur eingesteckten Medienleitung 6 hin zur sicheren Schmutzabdichtung durch relativ hohe radiale Verpressung zu gewährleisten, dabei aber gleichzeitig die zum Einstecken der Leitung 6 aufzuwendende Steckkraft sowie auch die radiale Lösekraft F_{L} (vgl. Fig. 3) gering zu halten, ist bei dieser Ausführung gemäß Fig. 29 bis 32 vorgesehen, dass im Bereich der Längsschlitze 38 zwischen dem weicheren Kunststoffmaterial und dem härteren Kunststoffmaterial radial außerhalb sowie axial unterhalb des Bereichs der Schmutzdichtung 34 tangentiale bzw. sekantenartige Freisparungen 70 gebildet sind (siehe auch Fig. 39 und 42). Dies kann formtechnisch durch entsprechende Querschieber erreicht werden. Dabei ist gemäß Fig. 31 und 32 die Schmutzdichtung 34 im Bereich der Freisparungen 70 axial in Einsteckrichtung 20 (vgl. Fig. 1 bis 3) über Stege 72 aus dem elastischen Material abgestützt. Weiterhin grenzt gemäß Fig. 27 und 28 der Bereich des größten Innenquerschnittes der erfindungsgemäßen Schwächungszone 50 jedes Federarms 40 direkt an eine in Einsteckrichtung 20 weisende, radiale Fläche 74 der Schmutzdichtung 34. Durch diese beschriebenen Maßnahmen wird bei guter radialer Dichtwirkung eine bestimmte Nachgiebigkeit im Bereich der Schmutzdichtung 34 derart erreicht, dass deren radiale Verpressung allenfalls einen sehr geringen Einfluss auf die Lösekraft F_{L} sowie auf die Steckkraft hat.

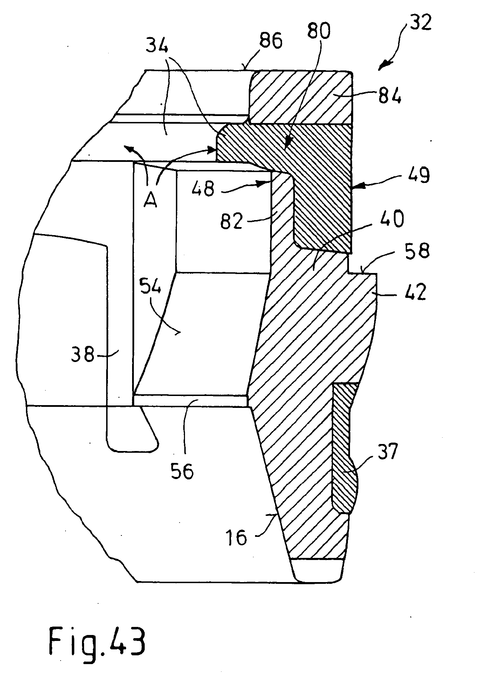

Die Ausführungsform gemäß Fig. 33 bis 43 unterscheidet sich von den Ausführungen gemäß 1 bis 32 durch eine besondere Ausgestaltung der erfindungsgemäßen Verformungszone 49. Hierbei sind die Federarme 40 derart axial verkürzt ausgebildet, dass sie mit ihren freien Enden 48 über axiale Zwischenräume 80 von dem mündungsseitigen Ende des hülsenförmigen Einsatzteils 32 entkoppelt sind. Dabei ist die Verformungszone 49 durch im Bereich der freien Federarm-Enden 48 und in den Zwischenräumen 80 angeordnete, mit der Schmutzdichtung 34 einstückige Bereiche des elastischen Kunststoffmaterials derart gebildet, dass bei der radialen Lösebewegung der Rastansätze 42 die freien Federarm-Enden 48 unter elastischer Material-Verformung des Kunststoffmaterials radial mitbewegt werden. Hierzu wird insbesondere auf die vergrößerte Darstellung in Fig. 43 hingewiesen. Bevorzugt ist das freie Ende 48 jedes Federarms 40 durch einen axialen, radial inneren, gegenüber dem Federarm 40 in seiner radial gemessenen Dicke reduzierten Stegabschnitt 82 gebildet. Dabei übergreift das die Verformungszone 49 bildende elastische Kunststoffmaterial die Stegabschnitte 82 radial und axial in Richtung auf die Rästansätze 42 zu. Durch diese vorteilhafte Ausgestaltung kann am mündungsseitigen Ende des Einsatzteils 32 ein in Umfangsrichtung durchgehender Ringabschnitt 84 aus dem ersten, formstabilen Kunststoffmaterial gebildet sein. Dieser Ringabschnitt 84 weist eine ebene, vordere Stirnringfläche 86 auf. Diese Ausgestaltung führt zu einer verbesserten, insbesondere axialen Abstützung und Abdeckung (Kammerung) der Schmutzdichtung 34 zum Schutz z. B. gegen Wasserstrahl (siehe hierzu insbesondere Fig. 35, 38 und 43).

In weiterer vorteilhafter Ausgestaltung sind am mündungsseitigen Ende des hülsenförmigen Einsatzteils 32 vorzugsweise zwei einander diametral gegenüberliegende, radial nach außen ragende Ansätze 88 angeordnet (siehe beispielsweise Fig. 37 und 40). Diese Ansätze 88 greifen in korrespondierende Ausnehmungen des Basisteils 28 derart ein, dass sie einerseits zur radialen Positionierung des Einsatzteils 32 im Basisteil 28 und andererseits als Endanschlag zur axialen Einsteckbegrenzung dienen (siehe insbesondere Fig. 33).

## Patentansprüche

1. Anschlussvorrichtung (1) zum Steckanschluss mindestens einer Medienleitung (6), bestehend aus einem Gehäuseteil (2) mit mindestens einer Aufnahmeöffnung (4) zum Einstecken der Leitung (6) sowie aus einem in der Aufnahmeöffnung (4) angeordneten Klemmring (8), der zum Arretieren der eingesteckten Leitung (6) mit einem Innenkonus (16) des Gehäuseteils (2) zusammenwirkt, wobei das Gehäuseteil (2) zweiteilig aus einem äußeren Basisteil (28) und einem mit diesem über eine Rastverbindung (30) lösbar verbundenen, den Innenkonus (16) aufweisenden inneren Einsatzteil (32) besteht, wobei das Einsatzteil (32) zwecks Lösbarkeit der Leitung (6) mindestens zwei radialelastische Federarme (40) aufweist, die sich vom Bereich des Innenkonus (16) mit ihren freien Enden (48) in Richtung zur Mündungsseite der Aufnahmeöffnung (4) erstrecken, wobei die Federarme (40) mit radial nach außen ragenden Rastansätzen (42) in korrespondierende Rastöffnungen (44) des Basisteils (28) eingreifen, wobei die Rastansätze (42) zum Lösen radial nach innen in eine die Rastöffnungen (44) freigebende Lösestellung bewegbar sind, und wobei an freien Enden (48) der Federarme (40) eine Schmutzdichtung (34) zur umfangsgemäßen Anlage auf der Medienleitung (6) angeordnet ist,
**dadurch gekennzeichnet, dass** die Rastansätze (42) der Federarme (40) bezüglich ihrer radialen Lösebewegung über eine Verformungszone (49) derart vom Dichtungsbereich (A) der Schmutzdichtung (34) entkoppelt sind, dass die radiale Lösebewegung der Rastansätze (42) durch Verformung der Verformungszone (49) im Wesentlichen unbeeinflusst von der radial auf der Medienleitung (6) aufliegenden Schmutzdichtung (34) erfolgt.

2. Anschlussvorrichtung nach Anspruch 1,
**dadurch gekennzeichnet, dass** das Einsatzteil (32) hülsenförmig ausgebildet ist, wobei die Federarme (40) durch Längsschlitze (38) gebildet sind, die ausgehend von einem umfangsgemäß geschlossenen, den Innenkonus (16) aufweisenden Ringabschnitt (46) bis zu den freien Enden (48) der Federarme (40) verlaufen.

3. Anschlussvorrichtung nach Anspruch 2,
**dadurch gekennzeichnet, dass** dasEinsatzteil(32)auseinem ersten, relativ härteren und formstabilen Kunststoffmaterial besteht und die Schmutzdichtung (34) materialschlüssig aus einem zweiten, relativ weicheren und elastischen Kunststoffmaterial angeformt ist, wobei das zweite, elastische Kunststoffmaterial auch die Längsschlitze (38) zwischen den Federarmen (40) ausfüllt.

4. Anschlussvorrichtung nach einem der Ansprüche 1 bis 3,
**dadurch gekennzeichnet,dass** jeder Federarm (40) als Verformungszone (49) eine Schwächungszone (50) mit reduzierter Biegesteifigkeit derart aufweist, dass bei radialer Abstützung des freien Federarm-Endes (48) über die Schmutzdichtung (34) auf der Leitung (6) der Rastansatz (42) unter Biegeverformung der Schwächungszone (50) radial nach innen in seine Lösestellung bewegbar ist.

5. Anschlussvorrichtung nach Anspruch 4,
**dadurch gekennzeichnet, dass** die Schwächungszone (50) jedes Federarms (40) im axial zwischen dem Rastansatz (42) und dem im Bereich der Schmutzdichtung (34) liegenden freien Federarm-Ende (48) angeordnet ist.

6. Anschlussvorrichtung nach Anspruch 4 oder 5,
**dadurch gekennzeichnet, dass** die Schwächungszone (50) jedes Federarms (40) durch eine Querschnittsreduzierung um mindestens 25 %, vorzugsweise um 50 % bis 75 %, des ursprünglichen Federarmquerschnittes gebildet ist.

7. Anschlussvorrichtung nach einem der Ansprüche 4 bis 6,
**dadurch gekennzeichnet, dass** jeder Federarm (40) in der Schwächungszone (50) auf seiner radial nach außen weisenden Seite eine radiale, vorzugsweise nutartig in Umfangsrichtung verlaufende Ausnehmung (52) aufweist.

8. Anschlussvorrichtung nach einem der Ansprüche 1 bis 3,
**dadurch gekennzeichnet, dass** die Federarme (40) mit ihren freien Enden (48) über axiale Zwischenräume (80) von dem mündungsseitigen Ende des hülsenförmigen Einsatzteils (32) entkoppelt sind, wobei die Verformungszone (49) durch im Bereich der freien Federarm-Enden (48) und in den Zwischenräumen (80) angeordnete, mit der Schmutzdichtung (34) einstückige Bereiche des/eines elastischen Kunststoffmaterials derart gebildet ist, dass bei der radialen Lösebewegung der Rastansätze (42) die freien Federarm-Enden (48) unter elastischer Material-Verformung des Kunststoffmaterials radial mitbewegt werden.

9. Anschlussvorrichtung nach Anspruch 8,
**dadurch gekennzeichnet, dass** das freie Ende (48) jedes Federarms (40) durch einen axialen, radial inneren, gegenüber dem Federarm (40) in seiner radial gemessenen Dicke reduzierten Stegabschnitt (82) gebildet ist, wobei das die Verformungszone (49) bildende elastische Kunststoffmaterial die Stegabschnitte (82) radial und axial übergreift.

10. Anschlussvorrichtung nach Anspruch 8 oder 9,
**dadurch gekennzeichnet, dass** am mündungsseitigen Ende des Einsatzteils (32) ein in Umfangsrichtung durchgehender Ringabschnitt (84) aus dem ersten, formstabilen Kunststoffmaterial gebildet ist.

11. Anschlussvorrichtung nach einem der Ansprüche 1 bis 10,
**dadurch gekennzeichnet, dass** das Einsatzteil (32) im Bereich der Federarme (40) auf seiner radial nach innen zur Leitung (6) weisenden Innenseite im Bereich der Verformungszone (49) einen vergrößerten Innendurchmesser aufweist.

12. Anschlussvorrichtung nach Anspruch 11,
**dadurch gekennzeichnet, dass** sichderlnnendurchmesserim Anschluss an den kleinsten Durchmesser des Innenkonus (16) über Konusabschnitte (54) in Richtung der Verformungszone (49) vergrößert.

13. Anschlussvorrichtung nach Anspruch 12,
**dadurch gekennzeichnet, dass** zwischendemlnnenkonus(16) und den Konusabschnitten (54) im Bereich jedes Federarms (40) eine Kante (56) mit einem Innendurchmesser gebildet ist, der größer als der Außendurchmesser der Medienleitung (6) ist.

14. Anschlussvorrichtung nach einem der Ansprüche 1 bis 13,
**dadurch gekennzeichnet, dass** der Rastansatz (42) jedes Federarms (40) eine Rastkantenfläche (58) mit einem äußeren Krümmungsradius (Rₐ) aufweist, der zumindest annähernd gleich dem Innenradius (Rᵢ) des Basisteils (28) ist.

15. Anschlussvorrichtung nach einem der Ansprüche 1 bis 14,
**dadurch gekennzeichnet, dass** innerhalbdesEinsatzteils(32) im Anschluss an den Innenkonus (16) als axialer Endanschlag für den Klemmring (8) erste Haltekanten (60) im Bereich der Federarme (40) sowie zweite Haltekanten (62) in den in Umfangsrichtung zwischen den Federarmen (40) liegenden Bereichen gebildet sind, wobei die ersten Haltekanten (60) gegenüber den zweiten Haltekanten (62) derart um einen axialen Versatz (X) in Richtung des Innenkonus (16) versetzt sind, dass der Klemmring (8) bei Beaufschlagung mit einer in Herausziehrichtung der Leitung (6) wirkenden Kraft (F_{Z}) zunächst zur Anlage nur an den ersten Haltekanten (60) gelangt und **dadurch** die Federarme (40) mit einer radial nach außen wirkenden Haltekraft-Komponente (F_{H}) beaufschlagt werden.

16. Anschlussvorrichtung nach Anspruch 14 oder 15,
**dadurch gekennzeichnet, dass** der Rastansatz (42) jedes Federarms (40) im Bereich seiner Rastkantenfläche (58) ein Anschlagelement (64) derart aufweist, dass in einem mit einer Kraft in Herausziehrichtung belasteten Zustand der Leitung (6) der Rastansatz (42) in einer definiert in die Rastöffnung (44) des Basisteils (28) eingreifenden Stellung gegen eine weitere radial nach außen gerichtete, insbesondere aus der Haltekfraft-Komponente (F_{H}) resultierende Bewegung abgestützt ist.

17. Anschlussvorrichtung nach einem der Ansprüche 1 bis 16,
**dadurch gekennzeichnet, dass** jeder Rastansatz (42) eine in axialer Richtung gesehen abgerundete Flankenfläche (66) aufweist.

18. Anschlussvorrichtung nach einem der Ansprüche 1 bis 17,
**dadurch gekennzeichnet, dass** die Schmutzdichtung (34) auf der freien Mündungsseite zumindest in Teilbereichen ihres Umfangs beidseitig axial gekammert ist.

19. Anschlussvorrichtung nach einem der Ansprüche 1 bis 18,
**dadurch gekennzeichnet, dass** am mündungsseitigen Ende des hülsenförmigen Einsatzteils (32) vorzugsweise zwei diametral gegenüberliegende, radial nach außen ragende Ansätze (88) angeordnet sind.

## Claims

1. A connecting device (1) for the plug-in connection of at least one media line (6), consisting of a housing part (2) with at least one receiving opening (4) for inserting the line (6) and also of a clamping ring (8) arranged in the receiving opening (4), which ring, for locking the inserted line (6), cooperates with an internal cone (16) of the housing part (2), the housing part (2) being made in two parts from an outer base part (28) and an inner insert part (32) connected detachably thereto via a latch connection (30) and having the internal cone (16), the insert part (32), for the purpose of detachability of the line (6), having at least two radially elastic spring arms (40) which extend from the region of the internal cone (16) with their free ends (48) towards the mouth side of the receiving opening (4), the spring arms (40) engaging with latch projections (42) protruding radially outwards in corresponding latch openings (44) in the base part (28), the latch projections (42), for the purpose of detachment, being movable radially inwards into a detachment position which clears the latch openings (44), and a dirt seal (34) for resting around the periphery of the media line (6) being arranged on free ends (48) of the spring arms (40),
**characterised in that** the latch projections (42) of the spring arms (40) with respect to their radial detachment movement are disconnected from the sealing region (A) of the dirt seal (34) via a deformation zone (49) such that the radial detachment movement of the latch projections (42) takes place by deformation of the deformation zone (49) substantially uninfluenced by the dirt seal (34) lying radially against the media line (6).

2. A connecting device according to Claim 1,
**characterised in that** the insert part (32) is formed in the shape of a sleeve, the spring arms (40) being formed by longitudinal slits (38) which extend starting from a peripherally closed ring section (46) having the internal cone (16) up to the free ends (48) of the spring arms (40).

3. A connecting device according to Claim 2,
**characterised in that** the insert part (32) consists of a first, relatively harder and dimensionally stable plastics material and the dirt seal (34) is formed on in a material connection from a second, relatively softer and elastic plastics material, the second, elastic plastics material also filling the longitudinal slits (38) between the spring arms (40).

4. A connecting device according to one of Claims 1 to 3,
**characterised in that** each spring arm (40) has as a deformation zone (49) a zone of weakness (50) with reduced flexural strength, such that if the free spring-arm end (48) is supported radially via the dirt seal (34) on the line (6) the latch projection (42) is movable radially inwards into its detachment position under bending deformation of the zone of weakness (50).

5. A connecting device according to Claim 4,
**characterised in that** the zone of weakness (50) of each spring arm (40) is arranged in the [noun missing] lying axially between the latch projection (42) and the free spring-arm end (48) lying in the region of the dirt seal (34).

6. A connecting device according to Claim 4 or 5,
**characterised in that** the zone of weakness (50) of each spring arm (40) is formed by a reduction in cross-section by at least 25%, preferably by 50% to 75%, of the original spring-arm cross-section.

7. A connecting device according to one of Claims 4 to 6,
**characterised in that** each spring arm (40) in the zone of weakness (50) has on its side facing radially outwards a radial recess (52) which preferably extends in the peripheral direction in the manner of a groove.

8. A connecting device according to one of Claims 1 to 3,
**characterised in that** the spring arms (40) with their free ends (48) are disconnected via axial gaps (80) from the mouth-side end of the sleeve-shaped insert part (32), the deformation zone (49) being formed by regions of the/an elastic plastics material arranged in the region of the free spring-arm ends (48) and in the gaps (80), which regions are of one piece with the dirt seal (34), such that upon the radial detachment movement of the latch projections (42) the free spring-arm ends (48) are radially moved therewith under elastic material deformation of the plastics material.

9. A connecting device according to Claim 8,
**characterised in that** the free end (48) of each spring arm (40) is formed by an axial, radially inner, crosspiece section (82) which is reduced in its radially measured thickness with respect to the spring arm (40), the elastic plastics material forming the deformation zone (49) engaging radially and axially across the crosspiece sections (82).

10. A connecting device according to Claim 8 or 9,
**characterised in that** a ring section (84) which is continuous in the peripheral direction is formed from the first, dimensionally stable plastics material on the mouth-side end of the insert part (32).

11. A connecting device according to one of Claims 1 to 10,
**characterised in that** the insert part (32) in the region of the spring arms (40) on its inside facing radially inwards to the line (6) has an increased internal diameter in the region of the deformation zone (49).

12. A connecting device according to Claim 11,
**characterised in that** the internal diameter adjoining the smallest diameter of the internal cone (16) increases via cone sections (54) towards the deformation zone (49).

13. A connecting device according to Claim 12,
**characterised in that** an edge (56) with an internal diameter which is greater than the external diameter of the media line (6) is formed between the internal cone (16) and the cone sections (54) in the region of each spring arm (40).

14. A connecting device according to one of Claims 1 to 13,
**characterised in that** the latch projection (42) of each spring arm (40) has a latch edge surface (58) with an outer radius of curvature (Rₐ) which is at least approximately equal to the internal radius (Rᵢ) of the base part (28).

15. A connecting device according to one of Claims 1 to 14,
**characterised in that** first holding edges (60) in the region of the spring arms (40) and also second holding edges (62) in the regions located in the peripheral direction between the spring arms (40) are formed within the insert part (32) adjoining the internal cone (16) as axial end stop for the clamping ring (8), the first holding edges (60) being offset relative to the second holding edges (62) by an axial offset (X) towards the internal cone (16) such that the clamping ring (8), when acted upon by a force (F_{Z}) acting in the direction of pulling-out of the line (6), initially comes to lie only on the first holding edges (60) and the spring arms (40) are thereby acted upon with a holding-force component (F_{H}) acting radially outwards.

16. A connecting device according to Claim 14 or 15,
**characterised in that** the latch projection (42) of each spring arm (40) in the region of its latch edge surface (58) has a stop element (64) such that in a condition of the line (6) loaded by a force in the direction of pulling-out, the latch projection (42) is supported in a position engaging in a defined manner in the latch opening (44) of the base part (28) against a further movement directed radially outwards in particular resulting from the holding-force component (F_{H}).

17. A connecting device according to one of Claims 1 to 16,
**characterised in that** each latch projection (42) has a flank surface (66) which is rounded off, viewed in the axial direction.

18. A connecting device according to one of Claims 1 to 17,
**characterised in that** the dirt seal (34) is axially chambered on both sides on the free mouth side at least in partial regions of its periphery.

19. A connecting device according to one of Claims 1 to 18,
**characterised in that** preferably two diametrically opposing projections (88) projecting radially outwards are arranged on the mouth-side end of the sleeve-shaped insert part (32).

## Revendications

1. Dispositif de raccordement (1) pour le raccordement d'au moins une conduite de fluide (6) se composant d'une partie de boîtier (2) comprenant au moins une ouverture de réception (4) pour emboîter la conduite (6) ainsi que d'un anneau de serrage (8) disposé dans l'ouverture de réception (4) qui coopère pour le blocage de la conduite (6) emboîtée avec un cône intérieur (16) de la partie de boîtier (2), dispositif dans lequel,
- la partie de boîtier (2) en deux parties se compose d'une partie de base (28) extérieure et d'une partie d'insertion (32) intérieure présentant le cône intérieur (16), reliée à celle-ci par un assemblage par encliquetage (30),
- la partie d'insertion (32) présente à des fins de détachement possible de la conduite (6) au moins deux bras à ressort (40) radialement élastiques qui s'étendent de la zone du cône intérieur (16) avec leurs extrémités (48) libres en direction du côté embouchure de l'ouverture de réception (4),
- les bras à ressort (40) s'engagent avec des épaulements d'encliquetage (42) dépassant radialement vers l'extérieur dans des ouvertures d'encliquetage (44) correspondantes de la partie de base (28),
- les épaulements d'encliquetage (42) peuvent être déplacés pour le détachement radialement vers l'intérieur dans une position de détachement libérant les ouvertures d'encliquetage (44), et
- une garniture antisalissure (34) est disposée au niveau des extrémités (48) libres des bras à ressort (40), pour l'appui selon la périphérie sur la conduite de fluide (6),
**caractérisé en ce que** les épaulements d'encliquetage (42) des bras à ressort (40) sont découplés par rapport à leur mouvement de détachement radial sur une zone de déformation (49) de la zone de garniture (A) de la garniture antisalissure (34) de telle sorte que le mouvement de détachement radial des épaulements d'encliquetage (42) soit effectué par la déformation de la zone de déformation (49) essentiellement sans être influencé par la garniture antisalissure (34) qui repose radialement sur la conduite de fluide (6).

2. Dispositif de raccordement selon la revendication 1,
**caractérisé en ce que** la partie d'insertion (32) est réalisée en forme de douille, dans lequel les bras à ressort (40) sont formés par des fentes longitudinales (38) qui s'étendent à partir d'un segment annulaire (46) présentant le cône intérieur (16), fermé selon la périphérie jusqu'aux extrémités libres (48) des bras à ressort (40).

3. Dispositif de raccordement selon la revendication 2,
**caractérisé en ce que** la partie d'insertion (32) se compose d'un premier matériau plastique, relativement plus dur et indéformable et la garniture antisalissure (34) est formée par liaison de matière en un second matériau plastique relativement plus mou et élastique, dans lequel le second matériau plastique élastique remplit également les fentes longitudinales (38) entre les bras à ressort (40).

4. Dispositif de raccordement selon l'une quelconque des revendications 1 à 3,
**caractérisé en ce que** chaque bras à ressort (40) présente comme zone de déformation (49) une zone d'affaiblissement (50) présentant une rigidité en flexion réduite de telle sorte que lors de l'appui radial de l'extrémité de bras à ressort (48) libre par le biais de la garniture antisalissure (34) sur la conduite (6), l'épaulement d'encliquetage (42) puisse être déplacé sous déformation en flexion de la zone d'affaiblissement (50) radialement vers l'intérieur dans sa position de détachement.

5. Dispositif de raccordement selon la revendication 4,
**caractérisé en ce que** la zone d'affaiblissement (50) de chaque bras à ressort (40) est disposée axialement entre l'épaulement d'encliquetage (42) et l'extrémité de bras à ressort (48) libre se trouvant dans la zone de la garniture antisalissure (34).

6. Dispositif de raccordement selon la revendication 4 ou 5,
**caractérisé en ce que** la zone d'affaiblissement (50) de chaque bras à ressort (40) est formée par une réduction de section d'au moins 25 %, de préférence de 50 % à 75 % de la section de bras à ressort originale.

7. Dispositif de raccordement selon l'une quelconque des revendications 4 à 6,
**caractérisé en ce que** chaque bras à ressort (40) présente, dans la zone d'affaiblissement (50) sur son côté dirigé radialement vers l'extérieur, un évidement (52) radial, qui s'étend de préférence comme une rainure dans le sens périphérique.

8. Dispositif de raccordement selon l'une quelconque des revendications 1 à 3,
**caractérisé en ce que** les bras à ressort (40) sont découplés avec leurs extrémités (48) libres sur des espaces intermédiaires (80) axiaux de l'extrémité côté embouchure de la partie d'insertion (32) en forme de douille, **en ce que** la zone de déformation (49) est formée par des zones d'un seul tenant avec la garniture antisalissure (34), disposées dans la zone des extrémités de bras à ressort (48) libres et dans les espaces intermédiaires (80) du/d'un matériau plastique élastique de telle sorte que lors du mouvement de détachement radial des épaulements d'encliquetage (42), les extrémités de bras à ressort (48) libres sont déplacées radialement sous déformation élastique du matériau plastique.

9. Dispositif de raccordement selon la revendication 8,
**caractérisé en ce que** l'extrémité (48) libre de chaque bras à ressort (40) est formée par une section de nervure (82) axiale, radialement intérieure, réduite par rapport au bras à ressort (40) dans son épaisseur mesurée radialement, et **en ce que** le matériau plastique élastique formant la zone de déformation (49) recouvre radialement et axialement les sections de nervure (82).

10. Dispositif de raccordement selon la revendication 8 ou 9,
**caractérisé en ce que** sur l'extrémité côté embouchure de la partie d'insertion (32) est formé un segment annulaire (84) continu dans le sens périphérique, ce segment étant composé du premier matériau plastique indéformable.

11. Dispositif de raccordement selon l'une quelconque des revendication 1 à 10,
**caractérisé en ce que** la partie d'insertion (32) présente un diamètre agrandi dans la zone des bras à ressort (40) sur son côté intérieur dirigé radialement vers l'intérieur vers la conduite (6) dans la zone de la zone de déformation (49).

12. Dispositif de raccordement selon la revendication 11,
**caractérisé en ce que** le diamètre intérieur à la suite du plus petit diamètre du cône intérieur (16) s'agrandit sur des sections coniques (54) en direction de la zone de déformation (49).

13. Dispositif de raccordement selon la revendication 12,
**caractérisé en ce qu'**entre le cône intérieur (16) et les sections coniques (54) dans la zone de chaque bras à ressort (40) est formée une arête (56) présentant un diamètre intérieur qui est plus grand que le diamètre extérieur de la conduite de fluide (6).

14. Dispositif de raccordement selon l'une quelconque des revendications 1 à 13,
**caractérisé en ce que** l'épaulement d'encliquetage (42) de chaque bras à ressort (40) présente une surface d'arête d'encliquetage (58) possédant un rayon de courbure (Rₐ) extérieur qui est au moins approximativement égal au rayon intérieur (Rᵢ) de la partie de base (28).

15. Dispositif de raccordement selon l'une quelconque des revendications 1 à 14,
**caractérisé en ce qu'**à l'intérieur de la partie d'insertion (32) à la suite du cône intérieur (16) servant de butée de fin de course axiale pour l'anneau de serrage (8) des premières arêtes de retenue (60) sont formées dans la zone des bras à ressort (40) et des secondes arêtes de retenue (62) sont formées dans les zones se trouvant dans le sens périphérique entre les bras à ressort (40), et **en ce que** les premières arêtes de retenue (60) sont décalées par rapport aux secondes arêtes de retenue (62) d'un déport (X) axial en direction du cône intérieur (16) de telle sorte que l'anneau de serrage (8) parvienne lors de la sollicitation par une force (F_{z}) agissant dans le sens de sortie de la conduite (6) tout d'abord en appui seulement sur les premières arêtes de retenue (60) et que les bras à ressort (40) soient sollicités par là-même par une composante de force de retenue (F_{H}) agissant radialement vers l'extérieur.

16. Dispositif de raccordement selon la revendication 14 ou 15,
**caractérisé en ce que** l'épaulement d'encliquetage (42) de chaque bras à ressort (40) présente dans la zone de sa surface d'arête d'encliquetage (58 )un élément de butée (64) de telle sorte que dans un état chargé d'une force dans le sens de sortie de la conduite (6), l'épaulement d'encliquetage (42) est appuyé dans une position s'engageant de manière définie dans l'ouverture d'encliquetage (44) de la partie de base (28) à l'encontre d'un autre mouvement dirigé radialement vers l'extérieur, résultant en particulier de la composante de force de retenue (F_{H}).

17. Dispositif de raccordement selon l'une quelconque des revendications 1 à 16,
**caractérisé en ce que** chaque épaulement d'encliquetage (42) présente une surface latérale (66) arrondie, vue dans le sens axial.

18. Dispositif de raccordement selon l'une quelconque des revendications 1 à 17,
**caractérisé en ce que** la garniture antisalissure (34) est axialement compartimentée des deux côtés sur le côté d'embouchure libre au moins en des zones partielles de sa périphérie.

19. Dispositif de raccordement selon l'une quelconque des revendications 1 à 18,
**caractérisé en ce que** de préférence deux épaulements (88) diamétralement opposés, dépassant radialement vers l'extérieur sont disposés sur l'extrémité côté embouchure de la partie d'insertion (32) en forme de douille.
